# EUROPÄISCHE PATENTSCHRIFT

(11) **EP 0 774 829 B1**
(45) Veröffentlichungstag und Bekanntmachung des Hinweises auf die Patenterteilung: **24.01.2001**
(21) Anmeldenummer: 96117798.7
(22) Anmeldetag: 07.11.1996
(51) Int. Cl.: H02P 6/14

(54) **Schaltung mit einem digitalen Controller für den Betrieb eines Synchronmotors**
Circuit with a digital controller for operating a synchronous motor
Circuit avec une commande numérique pour utilisation d'un moteur synchrone

(30) Priorität: 16.11.1995 DE 19542713
(43) Veröffentlichungstag der Anmeldung: 21.05.1997
(73) Patentinhaber: DEUTSCHE THOMSON-BRANDT GMBH, 78048 Villingen-Schwenningen (DE)
(72) Erfinder: Mahr, Peter, 78126 Weiler (DE); Reiner, Gerhard, 78052 Villingen-Schwenningen (DE)
(74) Vertreter: Rossmanith, Manfred, Dr.

(56) Entgegenhaltungen:
- EP-A- 0 324 396
- DE-A- 4 204 351
- GB-A- 2 188 801
- PATENT ABSTRACTS OF JAPAN vol. 014, no. 557 (E-1011), 11.Dezember 1990 & JP 02 239705 A (SANYO ELECTRIC CO LTD), 21.September 1990,
- XEROX DISCLOSURE JOURNAL, Bd. 16, Nr. 3, 1.Mai 1991, Seiten 153-155, XP000205862 SCHWEID S A: "PULSE-WIDTH MODULATION CONTROL OF BRUSHLESS MOTORS"

## Beschreibung

Die Erfindung betrifft eine Schaltung mit einem digitalen Controller für den Betrieb eines Synchronmotors.

Präzisionsmotoren zum Antrieb beispielsweise einer Videokopftrommel von Videorecordern sind üblicherweise als fremdkommutierte Synchronmotoren ausgeführt. Diese werden durch einen digitalen Controller mit rechteckförmigen Spannungen angesteuert, der schaltungstechnisch leicht realisierbar ist.

Der Motor ist beispielsweise ausgeführt mit einem Rotor, der als Scheibenmagnet mit zwei Polpaaren konzipiert ist. Er ist so gelagert, daß er sich mit geringem Abstand über der Statorspule drehen kann, die in drei um 120° versetzte Spulen aufgeteilt ist. Ein auf derselben Achse befestigter Rückschluß lenkt die Feldlinien senkrecht durch die Statorspulen.

Nachteilig bei dieser Motoransteuerung ist, daß insbesondere an den Schaltflanken der Rechtecksignale hohe Ströme auftreten, die zu starker Geräuschentwicklung wie auch zu elektrischen Störungen führen können. Auch der Drehmomentverlauf ist nicht gleichförmig genug. Dies ist insbesondere bei hohen Drehzahlen von 9000 Umdrehungen pro Minute problematisch.

Eine Schaltung nach dem Oberbegriff des Anspruchs 1 ist aus der EP-A-0 324 396 bekannt.

Die Aufgabe der vorliegenden Erfindung ist es, eine Schaltung der eingangs genannten Art zur Steuerung eines Synchronmotores anzugeben, die diese Nachteile vermeidet.

Diese Aufgabe wird durch die im Anspruch 1 angegebene Erfindung gelöst. Weiterbildungen der Erfindung sind in den Unteransprüchen angegeben.

Die Schaltung für den Betrieb des Synchronmotors enthält einen digitalen Controller, dessen Ausgangssignale, die der Ansteuerung der Spulen des Synchronmotors dienen, in der Schaltung in sinusförmige Signale gewandelt werden. Die Amplitude dieser Ansteuersignale wird in der Schaltung durch ein separates Steuersignal des Controllers beeinflußt.

Die Schaltung enthält weiterhin einen am Synchronmotor angeordneten Sensor, der ein Regelsignal zur Regelung des Synchronmotors erzeugt, das den Bewegungsablauf des Rotors erkennen läßt.

Ein der Ansteuerung einer Spule des Synchronmotors dienendes rechteckförmiges Signal wird in einem Integrator zuerst in ein dreieckförmiges Signal gewandelt. Dieses dreieckförmige Signal wird anschließend in einem Tiefpaßfilter in ein sinusförmiges Signal gewandelt.

Durch die sinusförmigen Signale wird eine weiche Ansteuerung der Motorspulen erreicht, die ein gleichförmiges Drehmoment für den Rotor bewirkt. Der Synchronmotor wird in einem Zweiquadrantenbetrieb betrieben, in dem immer alle drei Spulen aktiv sind, und der ein schnelles Beschleunigen und Abbremsen ermöglicht.

Die Amplitude eines Ansteuersignales wird mittels eines Multiplizieres geregelt, an dem das Steuersignal anliegt. Das Steuersignal ist vorteilhafterweise ein pulsbreitenmodeliertes Signal, mit dem der Multiplizierer das Ansteuersignal zerhackt. Die hierbei entstehenden Oberwellen werden durch das hinter dem Multiplizierer angeordnete Tiefpaßfilter beseitigt. Auf diese Weise wird eine aufwendige Digital-Analog-Wandlung des Steuersignals vermieden.

Der an dem Motor angeordnete Sensor erzeugt digitale Impulse, die die genaue Winkelposition und die Umdrehungsgeschwindigkeit des Rotors angeben, und die direkt von dem digitalen Controller verarbeitet werden können. Durch die Impulse wird ein Generator im Controller während des Betriebs synchronisiert. Die drei Ansteuersignale können in dem Controller auf einfache Weise aus den Generatorsignalen erzeugt werden mittels eines 3-Bit-Zählers und eines nachgeschalteten Decoders.

Die elektronische Schaltung läßt sich kostengünstig aufbauen, wobei Analogteil und Digitalteil ohne Analog-Digital-oder Digital-Analog-Converter miteinander verschaltet sind. Es wird zudem ein guter Wirkungsgrad erreicht. Anwendungen für die elektronische Schaltung ergeben sich insbesondere für digitale Videorecorder und für Camcorder, es sind aber auch weitere Anwendungen wie z.B. für Plattenlaufwerke in Computern oder für Compact-Disk-Laufwerke möglich.

Die Erfindung wird im folgenden anhand der Zeichnungen und einer Tabelle beispielhaft erläutert. Es zeigen
- Fig. 1: eine Schaltung zum Ansteuern eines Dreiphasen-Synchronmotors,
- Fig. 2: die in der Schaltung erzeugten elektronischen Signale für eine Phase,
- Fig. 3: eine Schaltung für eine Phase,
- Fig. 4: den Aufbau eines digitalen Controllers,
- Fig. 5: ein Regelsignal und die drei Ansteuersignale für die drei Phasen des Synchronmotors und
- Tab. 1: die Umcodierung von Zählerwerten in einem Decoder.

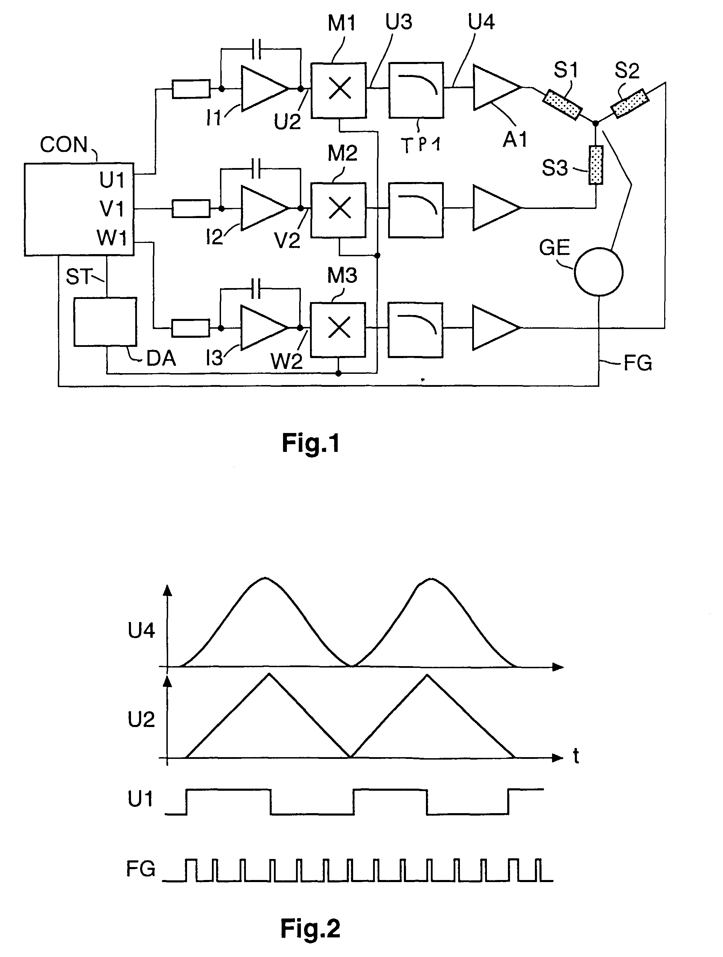

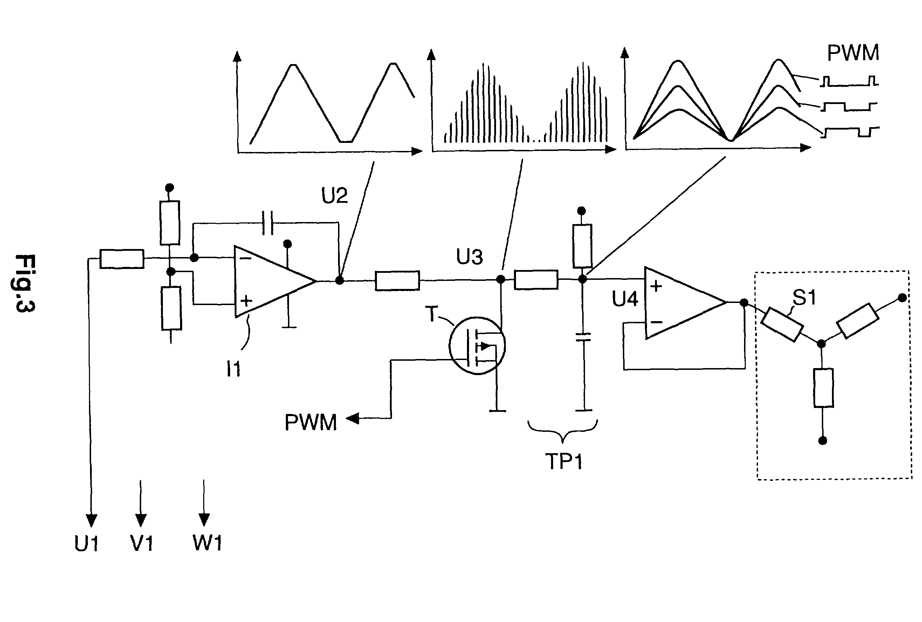

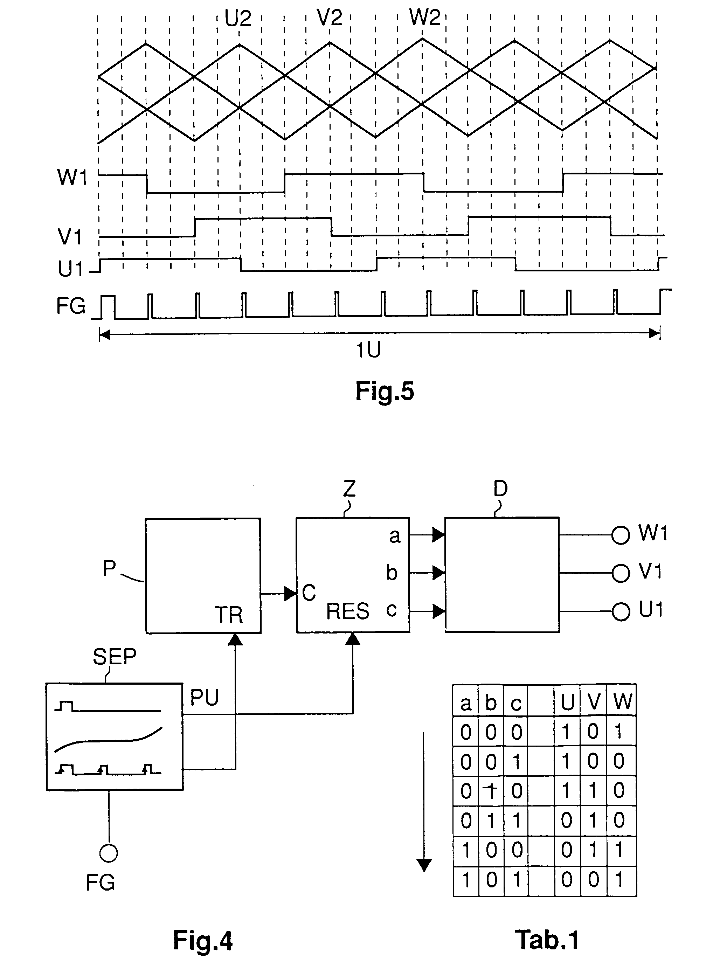

In Fig. 1 ist eine Schaltung mit einem digitalen Controller CON für den Betrieb eines Synchronmotors, der drei Spulen S1, S2 und S3 aufweist, dargestellt. Ein an dem Synchronmotor angeordneter Sensor GE erzeugt während des Betriebes ein Regelsignal FG, das dem Controller CON zugeführt wird. In dem Controller CON werden drei digitale Ansteuersignale U1, V1 und W1 für den Betrieb des Motors erzeugt. Diese rechteckförmigen Signale U1, V1, W1 werden jeweils durch einen nachgeschalteten, geeignet dimensionierten Integrator E1, E2, E3 in dreieckförmige Signale U2, V2, W2 umgewandelt.

Die drei Ansteuersignale U1, V1, W1 weisen gegeneinander jeweils eine Phasenverschiebung von 120° auf. Diese Phasenverschiebung wird in den einzelnen Stufen der Schaltung jeweils beibehalten. Die Verarbeitung der Ansteuersignale U1, V1, W1 in der Schaltung ist jeweils identisch, deshalb wird im folgenden nur noch die weitere Verarbeitung des Signales U2 für eine Phase beschrieben.

Das Ausgangssignal U2 des Integrators I1 wird durch einen nachfolgenden Multiplizierer M1 in seiner Amplitude beeinflußt. Dessen ebenfalls dreieckförmiges Ausgangssignal U3 wird anschließend in einem Tiefpaßfilter TP1 in ein sinusförmiges Signal U4 umgewandelt und durch einen Verstärker A1 verstärkt, bevor es an der Spule S1 des Synchronmotors anliegt.

In der Figur 2 ist das Ansteuersignal U1 zusammen mit den gewandelten Signalen U2 und U4 und dem Regelsignal FP des Sensors GE gegenüber der Zeit aufgetragen. Es verdeutlicht die Phasensynchronizität und die Signalformen der genannten Signale. Durch das Regelsignal FG wird der Synchronmotor durch den Controller CON phasensynchron betrieben und in seiner Umdrehungszahl gesteuert, wie weiter unten beschrieben.

Die Amplituden der an den Spulen S1, S2 und S3 anliegenden Signale (bzw. die Ströme) und damit die Umdrehungsgeschwindigkeit des Rotors werden durch ein separates Steuersignal ST, das jeweils an den Multiplizierern M1, M2 und M3 anliegt, geregelt. In diesem Ausführungsbeispiel wird das Steuersignal ST in einem Digital-Analog-Wandler DA digitalanalog gewandelt, bevor es von den analogen Multiplizierern U1, U2, U3 verarbeitet werden kann.

Beim Start des Motors erzeugt der Controller CON eigenständig drei um 120° versetzte Rechtecksignale U1, V1, W1 mit einer niedrigen Frequenz. Ist die Steuergröße ST ausreichend groß, so beginnt der Rotor dem anliegenden Drehfeld zu folgen und wird bis zu seiner Nenndrehzahl beschleunigt.

Ein vorteilhaftes Ausführungsbeispiel einer Schaltung für die Wandlung des rechteckförmigen Ansteuersignales U1 in ein sinusförmiges Signal U4 wird anhand der Figur 3 beschrieben.

Der Integrator I1 ist hier ein entsprechend geschalteter Operationsverstärker, der das Ansteuersignal U1 in ein leicht trapezförmiges Dreiecksignal U2 wandelt. Der nachgeschaltete Multiplizierer M1 besteht aus einem Feldeffekt (FET)-Transistor T, der das analoge Ausgangssignal des Integrators I1 im Takt eines pulsbreitendmodulierten Signales PWM zerhackt. Dabei bewirkt ein High-Pegel am Transisitor T, daß die Schwingung kurzgeschlossen wird, ein Low-Pegel hingegen, daß die Schwingung in ihrer ursprünglichen Amplitude weiter besteht. Ein entsprechend dimensioniertes Tiefpaßfilter TP1 filtert aus dem Signal U3 sowohl die hochfrequenten Oberwellen des PWM-Signales heraus als auch die Oberwellen des dreieckförmigen Signales. Die Kurvenform der Signale U2, U3 und U4 ist in der Figur 3 im oberen Bereich dargestellt.

Das Ausgangssignal des Tiefpasses TP1 ist also ein analoges sinusförmiges Signal, dessen Amplitude umgekehrt proportional zu dem Tastverhältnis des pulsbreitenmodulierten Signals PWM ist. Auf diese Weise kann ein teurer Digital-Analog-Wandler DA (Fig. 1) und ein aufwendiger analoger Multiplizierer vermieden werden. Durch die digitale Pulsbreitenmodulation treten zudem keine Schaltungstoleranzen auf. Die Wandlung des rechteckförmigen Signales U1 über ein dreieckförmiges Signal U2 in ein sinusförmiges Signal U4 hat den Vorteil, daß die Regelung durch den Transistor T während der gesamten Schwingungsperiode aktiv ist. Dies wäre nicht der Fall bei einem Rechtecksignal, da hier zu 50% der Zeit das Signal Null ist. Das dreieckförmige Signal U2 kann insbesondere auch trapezförmig abgeflacht sein, wie in Figur 3 dargestellt.

Ein Leistungsverstärker in Brückenschaltung führt nun das Ansteuersignal U4 direkt auf die Spule S1. Diese Brückenendstufe bewirkt, daß der Motor im Zwei-Quadrantenbetrieb arbeitet, das heißt, daß die Schaltung sowohl aktiv beschleunigen als auch aktiv bremsen kann. Es sind dadurch sehr schnelle und präzise Drehzahländerungen möglich.

Der Aufbau des digitalen Controllers CON (Fig. 1) wird anhand der Figur 4 näher beschrieben. Er enthält einen Generator P, der beim Start mit einem Grundtakt von ca. 18 Hz schwingt und dessen Ausgangssignal am Eingang eines 3-Bit-Zählers Z anliegt. Die drei Ausgänge dieses Zählers Z liegen an einem Decoder D an, der die Ansteuersignale U1, V1, W1 anhand der Tabelle 1 erzeugt. Die Ausgangssignale des Zählers Z werden in der Weise in dem Decoder D umcodiert, daß drei um 120° phasenverschobene Rechtecksignale entstehen. Der Zähler Z zählt von 1 bis 6 entsprechend binär von 0 bis 101, anschließend wird er durch einen Resetimpuls RES auf 0 zurückgesetzt. Wie aus der Tabelle 1 zu erkennen ist, ist die Schwingungsdauer der symmetrischen Rechteckschwingungen U1, V1, W1 genau 6 Zählimpulse lang. Die Zählrichtung ist durch den Pfeil an der Tabelle angedeutet.

Das von dem Sensor GE (Fig. 1) erzeugte Regelsignal FG liegt in dem Controller an einem Separator SEP an, der Trigger-Impulse TR für den Generator P und Reset-Impulse RES für den Zähler Z erzeugt. Wie aus Figur 2 ersichtlich, bestehen die Impulse des Regelsignales FG aus elf schmalen und einem breiten Rechteckimpuls. Jeder dieser Impulse startet in dem Separator SEP einen Trigger-Impuls TR. Der breite Impuls wird zusätzlich als Reset-Signal RES für den Zähler Z verwertet. Dieser bewirkt also den Zählerwert binär 000 und entspricht daher dem Startsignal für jede Rotorumdrehung.

Der an dem Motor angeordnete Sensor GE (Fig. 1) kann beispielsweise optisch mittels einer Leuchtdiode und einem Fototransistor, deren optische Verbindungslinie durch den Rotor periodisch unterbrochen wird, realisiert werden. Die mechanische Anordnung des Startimpulses wird dabei so gewählt, daß bei Nenndrehzahl der höchste Wirkungsgrad erreicht wird. Die Ansteuerung des Motors mit Sinussignalen ergibt zudem einen besseren Wirkungsgrad als die Ansteuerung mit Rechtecksignalen.

In der Figur 5 ist dargestellt, wie aus den Regelsignal FG die Ansteuersignale U1, V1 und W1 abgeleitet werden. Die Flanken der Ansteuersignale U1, V1 und W1 werden also durch die Rotor-Umdrehungen genau definiert. Durch genaues mechanisches Positionieren des optischen Sensors GEN wird erreicht, daß das Drehfeld einen optimalen Vorhaltewinkel zum Rotor annimmt, mit dem der günstigste Wirkungsgrad erreicht wird. Bei Nenndrehzahl besteht ein fester Phasenbezug zwischen dem magnetischen Drehfeld und dem Rotor. Während einer Rotorumdrehung werden also 12 Impulse erzeugt, deren Phasenabstand äquidistant 30° beträgt. In der Figur 5 sind zudem die durch die Integratoren I1, I2 und I3 (Figur 1) erzeugten dreieckförmige Signale U2, V2 und W2 dargestellt.

Es genügt ein einziger Sensor GEN für alle drei Ansteuersignale. Der optimale Zeitpunkt für den Startimpuls kann optional auch von dem Controller CON mittels einer programmierbaren Verzögerung eingestellt werden. Als Controller kann beispielsweise ein programmierbarer Logikbaustein (PLD) verwendet werden, der in einem Videorecorder sowieso bereits vorhanden ist. Die Schaltung kann sowohl integriert, als auch aus einzelnen Komponenten bestehend räumlich verteilt aufgebaut sein. Auch der Controller selbst kann aus einzelnen Bauteilen aufgebaut sein.

Der Synchronmotor kann auch eine von drei abweichende Anzahl von Spulen S1, S2 und S3 aufweisen, so daß die Schaltung dann eine entsprechende Anzahl von Ansteuersignalen aufweisen muß. Jede der Spulen S1, S2 oder S3 kann auch in mehrere Stränge unterteilt sein.

## Patentansprüche

1. Schaltung mit einem digitalen Controller für den Betrieb eines Synchronmotors, wobei die Schaltung Mittel (I1,I2,I3,M1,M2,M3,TP1) enthält, die digitale Ansteuersignale (U1,V1,W1) des Controllers (CON) für die Ansteuerung von Spulen (S1,S2,S3) des Synchronmotors jeweils in sinusförmige Signale wandeln, und ein Steuersignal (ST) des Controllers (CON) die Ansteuersignale (U1, V1, W1) beeinflußt, **dadurch gekennzeichnet**, daß die Mittel weiterhin einen Integrator (I1), der ein digitales Ansteuersignal (U1) des Controllers (CON) in ein dreieckförmiges Signal (U2) wandelt, einen Multiplizierer (M1), an dem ein Steuersignal (ST) des Controllers anliegt und mit dem die Amplitude des dreieckförmigen Signales (U2) einstellbar ist, und ein Tiefpaßfilter (TP1), der das dreieckförmige Signal (U2) in ein sinusförmiges Signal (U4) wandelt, enthalten.

2. Schaltung nach Anspruch 1, **dadurch gekennzeichnet**, daß die Schaltung einen am Synchronmotor angeordneten Sensor (GE) enthält, der ein Regelsignal (FG) zur Regelung des Synchronmotores erzeugt, das den Bewegungsablauf des Rotors erkennen läßt.

3. Schaltung nach Anspruch 1 oder 2, **dadurch gekennzeichnet**, daß der Multiplizierer (M1,T) vor dem Tiefpaßfilter (TP1) angeordnet ist, und daß das Steuersignal (ST,PWM) ein pulsbreitenmoduliertes Signal ist, mit dem der Multiplizierer (M1,T) das Ansteuersignal (U1) zerhackt, wobei die hierdurch entstehenden Oberwellen im Tiefpassfilter (TP1) ausgesiebt werden.

4. Schaltung nach einem der Ansprüche 2 oder 3, **dadurch gekennzeichnet**, daß der Sensor (GE) pro Rotor-Umdrehung 12 Rechteckimpulse erzeugt, und daß einer der Impulse, der als Startimpuls (PU) für eine Umdrehung dient, eine im Vergleich zu den anderen Impulsen veränderte Pulsbreite aufweist.

5. Schaltung nach Anspruch 4, **dadurch gekennzeichnet**, daß der Controller (CON) einen Generator (P) aufweist, der für den Start des Motors eine Anlaufrequenz erzeugt, und der während des Betriebes durch die Impulse (FG) des Sensors (GE) synchronisiert wird.

6. Schaltung nach Anspruch 5, **dadurch gekennzeichnet**, daß nach dem Generator (P) im Controller (CON) ein 3-Bit-Zähler (Z) angeordnet ist, der die Impulse des Generators (P) zählt und dessen Ausgangssignale mittels eines Decoders (D) in drei um 120° phasenverschobene Rechtecksignale (U1,V1,W1) gewandelt werden.

7. Schaltung nach Anspruch 6, **dadurch gekennzeichnet**, daß der Startimpuls (PU) den Zähler (Z) zurücksetzt.

8. Schaltung nach einem der vorherigen Ansprüche, **dadurch gekennzeichnet**, daß sie für eine Anwendung in einem digitalen Videorecorder oder in einem Camcorder verwendbar ist.

## Claims

1. Circuit having a digital controller for operation of a synchronous motor, wherein the circuit contains means (11, 12, 13, M1, M2, M3, TP1) which convert digital drive signals (U1, V1, W1) of the controller (CON) for driving coils (S1, S2, S3) of the synchronous motor into sinusoidal signals in each case, one control signal (ST) from the controller (CON) influencing the drive signals (U1, V1, W1),
**characterized in that** said means additionally comprise an integrator (I1) which converts a digital drive signal (U1) of the controller (CON) into a triangular waveform signal (U2), a multiplier (M1) to which a control signal (ST) of the controller is applied and by means of which the amplitude of the triangular waveform signal (U2) can be adjusted, and a low-pass filter (TP1) which converts the triangular waveform signal (U2) into a sinusoidal signal (U4).

2. Circuit according to claim 1, **characterized in that** the circuit contains a sensor (GE) which is arranged on the synchronous motor and produces a regulating signal (FG) for regulating the synchronous motor, which regulating signal (FG) allows the movement sequence of the rotor to be identified.

3. Circuit according to claim 1 or 2, **characterized in that** the multiplier (M1, T) is arranged upstream of the low-pass filter (TP1), and in that the control signal (ST, PWM) is a pulse-width-modulated signal by means of which the multiplier (M1, T) chops the drive signal (U1), the harmonics which are produced as a consequence being filtered out in the low-pass filter (TP1).

4. Circuit according to one of the preceding claims 2 or 3, **characterized in that** the sensor (GE) produces 12 square-wave pulses per rotor revolution, and in that one of the pulses, which is used as a start pulse (PU) for a revolution, has a pulse width which is different from that of the other pulses.

5. Circuit according to claim 4, **characterized in that** the controller (CON) has a generator (P) which produces a starting frequency for the starting of the motor and which is synchronized, during operation, by the pulses (FG) of the sensor (GE).

6. Circuit according to claim 5, **characterized in that** a 3-bit counter (Z) is arranged downstream of the generator (P) in the controller (CON) and counts the pulses of the generator (P), its output signals being converted by means of a decoder (D) into three square-wave signals (U1, V1, W1) which are phase-shifted through 120°.

7. Circuit according to claim 6, **characterized in that** the start pulse (PU) resets the counter (Z).

8. Circuit according to one of the preceding claims, **characterized in that** said circuit can be used for an application in a digital video recorder or in a camcorder.

## Revendications

1. Circuit avec une commande numérique pour l'utilisation d'un moteur synchrone, dans lequel le circuit contient des dispositifs (11, 12, 13, M1, M2, M3, TP1) qui convertissent les signaux de commande numériques (U1, V1, W1) du contrôleur (CON) pour la commande des bobines (S1, S2, S3) du moteur synchrone en signaux sinusoïdaux et dans lequel un signal d'activation (ST) du contrôleur (CON) perturbe les signaux de commande (U1, V1, W1), **caractérisé en ce que** les dispositifs contiennent un intégrateur (11) qui convertit un signal de commande numérique (U1) du contrôleur (CON) en un signal triangulaire (U2), un multiplicateur (M1) au niveau duquel est situé un signal d'activation (ST) du contrôleur (CON) et grâce auquel l'amplitude du signal triangulaire (U2) est réglable et enfin un filtre passe-bas (TP1) qui convertit le signal triangulaire (U2) en un signal sinusoïdal (U4).

2. Circuit conforme à la revendication 1, **caractérisé en ce que** le circuit contient un capteur (GE) qui, placé au niveau du moteur synchrone, produit un signal (FG) qui sert à régler le moteur synchrone et reconnaît le mouvement du rotor.

3. Circuit conforme à la revendication 1 ou 2, **caractérisé en ce que** le multiplicateur (M1, T) est placé avant le filtre passe-bas (TP1) **et en ce que** le signal d'activation (ST, PWM) est un signal dont les impulsions sont modulées en durée et grâce auquel les ondes harmoniques créées sont filtrées dans le filtre passe-bas (TP1).

4. Circuit conforme à l'une des revendications 2 ou 3, **caractérisé en ce que** le capteur (GE) produit 12 impulsions carrées par rotation du rotor **et en ce que** l'une des impulsions servant d'impulsion de démarrage (PU) pour une rotation présente une durée d'impulsion différente de celle des autres impulsions.

5. Circuit conforme à la revendication 4, **caractérisé en ce que** le contrôleur (CON) présente un générateur (P) qui produit une fréquence de démarrage pour le moteur et est synchronisé par les impulsions (FG) du capteur (GE) pendant le fonctionnement.

6. Circuit conforme à la revendication 5, **caractérisé en ce qu'**un compteur 3 bits (Z) est placé après le générateur (P), dans le contrôleur (CON), pour compter les impulsions du générateur (P) et ses signaux de sortie sont convertis par un décodeur (D) en trois signaux rectangulaires (U1, V1, W1) présentant un décalage de phase de 120°.

7. Circuit conforme à la revendication 6, **caractérisé en ce que** l'impulsion de démarrage (PU) réinitialise le compteur (Z).

8. Circuit conforme à l'une des revendications précédentes, **caractérisé en ce qu**'il peut être utilisé dans un magnétoscope numérique ou un caméscope.
